Europäisches Patentamt

European Patent Office

Office européen des brevets

(11) Numéro de publication : **0 383 674 B1**

(12) **FASCICULE DE BREVET EUROPEEN**

(45) Date de publication du fascicule du brevet :
**23.12.92 Bulletin 92/52**

(51) Int. Cl.$^5$ : **C02F 3/30**

(21) Numéro de dépôt : **90400389.4**

(22) Date de dépôt : **13.02.90**

(54) **Procédé et installation de traitement biologique, notamment par nitrification et/ou dénitrification, d'une eau résiduaire contenant une pollution azotée.**

(30) Priorité : **14.02.89 FR 8901886**

(43) Date de publication de la demande :
**22.08.90 Bulletin 90/34**

(45) Mention de la délivrance du brevet :
**23.12.92 Bulletin 92/52**

(84) Etats contractants désignés :
**BE CH DE DK ES FR GB IT LI NL SE**

(56) Documents cités :
**EP-A- 0 058 974**
**CH-A- 545 254**
**GB-A- 2 032 904**
**US-A- 3 855 120**
**US-A- 4 693 827**
**PATENT ABSTRACTS OF JAPAN, vol. 8, no. 266 (C-255), 6 décembre 1980;**

(56) Documents cités :
**KORRESPONDENZ ABWASSER, vol. 35, no. 3, mars 1988, pages 247-252,255, St. Augustin, DE; H.J. PÖPEL et al.:"Aktivkohleanwendung in der Abwasserreinigung, Teil I"**
**CHEM.-ING.-TECH., vol. 51, no. 6, juin 1979, pages 549-559, Verlag Chemie GmbH, Weinheim, DE; K.-P. BECKER: "DasOxitron-System, ein neues biologische Abwasserreinigungs-Verfahren für den BSB5-Abbau sowie zur Nitrifikation und Denitrifikation"**

(73) Titulaire : **OMNIUM DE TRAITEMENTS ET DE VALORISATION (OTV)**
**Le Doublon 11 avenue Dubonnet**
**F-92407 Courbevoie Cédex (FR)**

(72) Inventeur : **Sibony, Jacques**
**3, rue Ferdinand Flocon**
**F-75018 Paris (FR)**
Inventeur : **Desbos, Gilbert**
**9bis, rue Laffitte**
**F-78600 Maisons Laffitte (FR)**

(74) Mandataire : **Rinuy, Santarelli**
**14, avenue de la Grande Armée**
**F-75017 Paris (FR)**

EP 0 383 674 B1

Jouve, 18, rue Saint-Denis, 75001 PARIS

## Description

L'invention concerne le traitement biologique des eaux résiduaires, urbaines ou industrielles, et des eaux à rendre potables.

Ainsi qu'on le sait, les eaux résiduaires et parfois également les eaux à rendre potables, contiennent des matières en suspension non seulement minérales mais aussi organiques et azotées. Ces eaux résiduaires contiennent en outre des matières dissoutes ou colloïdales (particules de moins d'un micron).

Pour leur traitement, il a été développé des procédés de traitement biologique selon lesquels on fait se développer de la biomasse, c'est-à-dire des colonies de bactéries destinées à se nourrir des matières organiques ou azotées contenues dans les eaux à traiter.

On peut répartir les procédés de traitement biologique des eaux résiduaires en deux grandes catégories.

Une première catégorie de procédés de traitement biologique fait intervenir des boues activées après un prétraitement. Ainsi, dans une cuve dite de "boues activées" où arrive de l'eau brute, on entretient des conditions d'aération propres à fournir de l'oxygène aux microorganismes et à maintenir les boues en expansion grâce à un dispositif d'aération approprié tel que, par exemple, des tubes percés en fond de cuve, ou une turbine d'aération située en surface.

L'effluent qui sort de cette cuve passe dans un clarificateur à la base duquel on soutire une partie des boues pour la recycler dans la cuve et y maintenir la vie biologique ; on élimine les boues en excès. Si $y$ désigne la teneur en biomasse de l'eau, cette grandeur est maintenue généralement dans la cuve de boues activées à une valeur classiquement comprise entre 2 et 6 g/l, par exemple égale à 5 g/l.

En général, l'épaississement des boues se fait sans intervention d'un quelconque matériau granulaire. En effet le procédé dit "à boues activées" implique en principe que les bactéries ou microorganismes sont libres.

Selon une variante, il a toutefois déjà été proposé d'ajouter du charbon actif en poudre comme adjuvant d'épuration. Cela est par exemple décrit dans le brevet CH-545.254 ou dans l'article "PAC Process" de Mr John A. MEIDL dans WATER/ENGINEERING & MANAGEMENT, June 1982, pp 33-36. Mais le charbon actif est principalement utilisé pour ses capacités d'adsorption lui permettant d'adsorber des toxines non biodégradables. Compte tenu du prix élevé du charbon actif, il est important de prévoir des boucles de régénération les plus efficaces possibles, qui en pratique sont complexes et consommatrices d'énergie (il faut en particulier prévoir un chauffage à 200° C du charbon actif chargé).

Selon d'autres variantes il a été proposé d'utiliser comme adjuvant aux boues, du carbonate de calcium, voire des cendres volantes que l'on accepte de perdre dans les boues en excès que l'on évacue.

Les performances d'un tel procédé par boues activées dépendent du rapport de la charge massique de pollution incidente (mesurée en Kg/l) exprimée en demande biologique en oxygène pour une période donnée, à la quantité de biomasse présente dans la cuve de boues activées (on s'intéresse généralement au paramètre DB05 qui correspond à la demande biologique en oxygène d'une masse donnée de biomasse pendant 5 jours). Le rapport, qui revient à ramener le flux de nourriture à la capacité de consommation de la biomasse, se mesure en kg/kg.jour ou en j$^{-1}$. Plus il est élevé plus important peut être le débit d'eau à traiter et plus faible est l'investissement nécessaire. Il varie en pratique entre 0,1 et 1.

Les procédés par boues activées visent quelquefois aussi à traiter la pollution azotée ; le paramètre pertinent est alors le poids d'azote traité par kilogramme de biomasse et par jour ; ce paramètre a la même dimension que précédemment.

Les techniques de boues activées sont limitées par l'aptitude des boues activées, chargées ou non, à se décanter, que l'on a l'habitude de caractériser par l'indice MOHLMANN qui correspond au volume occupé par un gramme de boue : plus l'indice est bas, meilleure est la décantation. En pratique les indices relevés varient entre une valeur de 1000 (très mauvais) et une valeur de 100 (très bonne). On comprend que le processus de traitement peut se maintenir avec des teneurs $y$ en biomasse d'autant plus élevées que l'indice MOHLMANN correspondant est faible.

Pour augmenter les performances d'une installation, on cherche a priori à admettre en régime permanent des teneurs en biomasse les plus élevées possibles, si possible atteignant voire dépassant 10g/l, mais les procédés connus ne permettent guère de dépasser 5 à 6 g/l. A priori, on cherche en outre à réduire l'indice de MOHLMANN.

Une seconde catégorie de procédés de traitement fait intervenir des bactéries fixées, par exemple sur le matériau granulaire d'un lit fluidisé que l'on fait traverser de bas en haut par l'effluent brut. Le maintien du lit à l'état fluidisé sans entraînement impose des contraintes très strictes quand au débit de l'effluent, qui peuvent se révéler incompatibles avec l'amplitude des fluctuations de volume d'eau à traiter journellement. En outre, ces procédés à lit fluidisé présentent des difficultés au démarrage. Enfin, la régénération du matériau granulaire du lit impose un recyclage partiel entre deux niveaux du lit, ce qui est consommateur d'énergie. Des exemples de ce type de procédés sont donnés par le brevet US-3.855.120 ou par l'article sur le système "OXITRON" publié dans CHEM-ING-TECH, Vol 51, n=6, Juin 1979. pp 549-559, Verlag Chemie GmBh Weinheim Germany.

L'invention a pour objet de pallier les inconvénients précités et d'améliorer les performances du traitement, principalement en présence de pollution azotée sous forme d'ammoniaque, de réduire l'encombrement tout en admettant une souplesse d'utilisation compatible avec les fluctuations du débit d'entrée de l'effluent brut, le tout pour des coûts d'investissement (voire de fonctionnement) moindres que par le passé à un niveau comparable de performances.

Elle propose à cet effet un procédé de traitement biologique d'une eau résiduaire à traiter contenant au moins une pollution azotée, selon lequel :

- on amène un débit incident de cette eau dans une zone de mélange à au moins un compartiment dans laquelle, par brassage mécanique turbulent, on met en suspension homogène dans cette eau un matériau granulaire peu consommable et peu soluble, chargé en biomasse, que l'on maintient à une concentration massique sensiblement constante ;
- on fait circuler cette suspension homogène d'eau et de matériau granulaire dans une zone de séparation dont on extrait, d'une part de l'eau clarifiée, d'autre part du matériau granulaire chargé en biomasse ; et
- on ramène par recyclage forcé la quasi-totalité de la biomasse active fixée au matériau granulaire vers la zone de mélange.

Il est à noter que dans la zone de mélange se produit un brassage intégral très différent du flux linéaire que l'on observe pour le flux d'effluent dans les procédés mettant en oeuvre un lit fluidisé. En outre toute la masse de matériau granulaire passe en principe dans la zone de séparation.

On se dégage ainsi des contraintes opératoires sévères liées aux lits fluidisés, tout en obtenant des rendements d'épuration bien supérieurs à ceux qui pourraient être trouvés pour des charges massiques équivalentes en l'absence de matériau granulaire (boues activées), le tout pour un coût d'investissement et d'exploitation modéré, le matériau granulaire pouvant être un matériau minéral bon marché, du sable par exemple, facile à régénérer sans dépense excessive d'énergie.

Selon des dispositions préférées éventuellement combinées :

- la pollution azotée étant sous forme d'ammoniaque, on injecte en outre dans la zone de mélange de l'oxygène par exemple sous forme d'air, dans un débit propre à favoriser le développement d'une biomasse nitrifiante, fixée sur le matériau granulaire.
- dans le cas où la pollution azotée est sous forme de nitrates, on injecte en outre dans cette zone de mélange en milieu anoxique (c'est-à-dire sans injection d'oxygène libre) une source de carbone organique,
- dans le cas où la pollution azotée est sous forme organique ou sous forme d'ammoniaque, cette zone de mélange est composée de deux volumes de nitrification (aérobie) puis de dénitrification (anoxique), ou inversement avec recyclage des boues et du matériau granulaire entre ces deux volumes,
- le matériau granulaire que l'on met en suspension homogène est de type minéral, de préférence du sable fin,
- on récupère par séparation physique ou chimique (non thermique), de préférence mécanique, le matériau granulaire contenu dans une partie résiduelle non recyclée des boues et on le réinjecte avec de la biomasse active qui s'y est fixée dans la zone de mélange tandis qu'on évacue des boues, peu adhérentes, séparées de ce matériau granulaire,
- la concentration du matériau granulaire dans la zone de mélange est maintenue approximativement à une valeur comprise entre 5 et 100 g/l, voire entre 5 et 50 g/l,
- la concentration du matériau granulaire étant du sable fin, sa concentration est maintenue à une valeur comprise entre 5 et 50 g/l, par exemple voisine de 20g/l,
- le brassage turbulent induit un recyclage interne entre 5 et 100 fois le débit incident, de préférence compris entre 10 et 50 voire entre 10 et 30 fois de débit incident,
- on ramène dans la zone de mélange par recyclage forcé le matériau granulaire portant la biomasse fixée dans un débit valant entre 10 et 500 % du débit incident de l'eau,
- on ramène cette quasi-totalité du matériau granulaire portant la biomasse fixée dans le débit incident d'eau en amont de la zone de mélange, ou directement dans celle-ci,
- on laisse dégazer la suspension homogène avant de la faire pénétrer dans la zone de séparation.

On appréciera que, dans le cas, important en pratique, d'une eau contenant une pollution azotée sous forme d'ammoniaque, qu'il y ait ou non prélèvement d'une partie résiduelle des boues en excès à évacuer, il y a conservation de la totalité (ou presque) des bactéries nitrifiantes, qui sont lentes à se former mais qui sont très adhérentes et qui ne se détachent pas lors de la séparation physique même lorsque celle-ci est puissante, par hydrocyclonage par exemple.

L'invention propose également une installation de traitement biologique d'une eau résiduaire prétraitée contenant une pollution azotée comportant :

- une zone de mélange à au moins un compartiment dans laquelle débouche une canalisation d'admission d'eau à traiter, qui contient un matériau granulaire peu consommable et peu soluble chargé en biomasse fixée, et qui est munie de moyens mécaniques de brassage turbulent capables de maintenir l'eau et le matériau granulaire en suspension homogène jusque dans une zone de séparation située en aval ;

- cette zone de séparation en aval de la zone de mélange munie d'une voie d'évacuation d'eau clarifiée et une voie d'évacuation de matériau granulaire chargé ; et

- une canalisation de recyclage de matériau granulaire chargé en biomasse munie de moyens de pompage, partant de la voie d'évacuation de matériau granulaire chargé et aboutissant à la zone de mélange ou en amont de celle-ci.

Selon des dispositions préférées :

- la zone de mélange comporte au moins un réacteur (ou compartiment) de mélange comportant des moyens d'oxygénation,

- les moyens d'oxygénation sont formés par une rampe d'oxygénation,

- la zone de mélange comporte en série un réacteur aérobie de nitrification contenant une arrivée d'oxygène et un réacteur anoxique de dénitrification contenant une arrivée de carbone organique,

- la zone de mélange comporte en série un réacteur anoxique de dénitrification, puis un réacteur aérobie de nitrification muni d'une arrivée d'oxygène, une canalisation de recyclage étant connectée entre la sortie du réacteur aérobie de nitrification et le réacteur anoxique de dénitrification,

- les moyens mécaniques de brassage turbulent comportent un agitateur,

- cet agitateur comporte des pales décalées le long d'un arbre d'entraînement et conformés en sorte de provoquer le long de cet arbre des écoulements de sens contrariés,

- cet agitateur est disposé verticalement,

- le matériau granulaire est de type minéral, par exemple du sable fin,

- le matériau granulaire a dans la zone de mélange, notamment dans le cas de sable fin, une concentration comprise entre 5 et 100 g/l, voire entre 5 et 50 g/l,

- le matériau granulaire a une granulométrie comprise entre 20 et 500 $\mu m$,

- le matériau granulaire est du sable de granulométrie comprise entre 80 et 200 $\mu m$,

- cette installation comporte une chaîne de séparation physique, notamment de type mécanique, partant de la voie d'évacuation de matériau granulaire chargé en parallèle sur la canalisation de recyclage et aboutissant à une canalisation de réinjection de matériau granulaire chargé en biomasse aboutissant à la zone de mélange ou en amont de celle-ci,

- cette installation comporte une zone de dégazage entre la zone de mélange et la zone de séparation,

- la zone de séparation est un décanteur, lequel peut comporter des éléments de décantation lamellaire ; la séparation peut aussi être effectuée par tout autre moyen approprié tel que centrifugation, tamisage, ou filtration sur membrane notamment.

Des objets, caractéristiques et avantages de l'invention ressortent de la description qui suit, donnée à titre d'exemple non limitatif, en regard des dessins annexés sur lesquels :

- la figure 1 est une vue schématique simplifiée d'une installation de traitement biologique conforme à l'invention ;

- la figure 2 est une vue schématique partielle d'une variante de réalisation de cette installation ;

- la figure 3 est une vue schématique simplifiée d'encore une autre variante de réalisation d'une installation conforme à l'invention, correspondant à un traitement combiné de nitrification/dénitrification ; et

- la figure 4 est une variante de réalisation de l'installation de la figure 1, correspondant comme à la figure 3 à un traitement de nitrification/dénitrification.

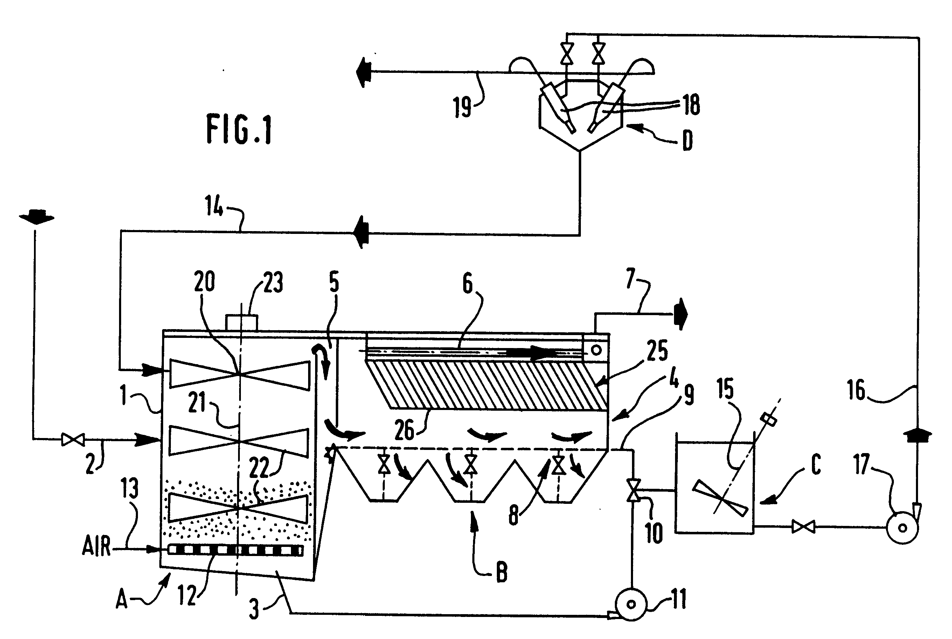

L'installation de traitement biologique représentée à la figure 1 comprend principalement une zone de mélange A et une zone de séparation B.

La zone de mélange A comporte au moins un réacteur de mélange 1 (ici unique) contenant un matériau granulaire chargé en biomasse et dans lequel débouche une canalisation 2 d'arrivée d'eau à traiter, et une canalisation 3 de recyclage de la quasi-totalité du matériau granulaire chargé en biomasse, tandis que la zone de séparation B comporte une chambre 4 communiquant avec le réacteur de melange 1, ici par l'intermédiaire d'un couloir vertical de dégazage 5 ; cette chambre 4 est munie de moyens de captation 6 aboutissant à une conduite 7 d'évacuation d'eau clarifiée, ainsi que de moyens 8 d'extraction du matériau granulaire chargé en biomasse aboutissant à une conduite 9 d'évacuation de matériau granulaire charge. Sur cette conduite 9 est prévue une vanne réglable de dérivation 10 d'où part la canalisation 3 de recyclage précitée. Celle-ci est en pratique équipée de moyens de pompage 11.

De manière préférée (cas pollution azotée sous forme d'ammoniaque, voire DBO), dans le réacteur de mélange 1 sont également prévus des moyens d'aération, ici constitués par une rampe d'aération comportant des tubes percés 12 disposés au fond du réacteur, qui sont branchés sur une canalisation 13 d'arrivée d'air ou d'oxygène. En variante non représentée, ces moyens d'aération sont constitués d'une turbine d'aération de surface. Le débit d'injection d'air est avantageusement choisi en sorte de transférer dans l'eau entre 4 et 5 kg d'oxygène par kg (N-NH$_4$), pour la nitrification, et entre 0,5 et 1,5 kg d'oxygène par kg (DBO), pour l'élimination de DBO.

De manière également préférée, à ce réacteur parvient en outre une canalisation 14 d'injection de matériau granulaire, avantageusement obtenu par récupération du matériau granulaire chargé en biomasse (active) contenu dans une éventuelle fraction non recyclée de matériau granulaire chargé sortant de la chambre de séparation 4 par la canalisation 9. A cet effet ladite fraction non recyclée circule après la vanne de dérivation 10 dans une chaîne de récupération/séparation comportant ici un bac C de réception de matériau granulaire chargé muni d'un agitateur 15 et un dispositif de récupération/séparation D. Du bac de réception C part une conduite 16 munie de moyens de pompage 17, qui aboutit au dispositif D : celui-ci comporte en pratique des hydrocyclones 18 à la sortie desquels sont évacuées, par une canalisation 19, des boues sans matériau granulaire, et, par la conduite 14, le matériau granulaire chargé en biomasse en un état physique propre à en permettre la réinjection dans le réacteur de mélange 1. En variante non représentée la récupération peut se faire, notamment, par tamisage, par ultrasons à puissance modérée, par centrifugation, par voie chimique ou biologique (par exemple en laissant le matériau granulaire chargé séjourner un certain temps sans alimentation et/ou sans oxygénation).

Dans le réacteur de mélange 1 sont prévus des moyens mécaniques 20 de brassage turbulent, ici constitués par un agitateur comportant un arbre vertical 21 portant des pales 22 et entraîné en rotation par un moteur 23.

Dans la chambre de séparation 4 sont prévus des moyens séparateurs 25, ici de type statique, par exemple constitués par des blocs 26 de décantation lamellaire.

Dans l'exemple représenté à la figure 1, la canalisation 2 d'arrivée d'eau à traiter débouche approximativement à mi-hauteur dans le réacteur. Toutefois, compte tenu du brassage turbulent effectué par l'agitateur, la position en hauteur de l'arrivée d'eau peut être quelconque.

De même ce n'est qu'à titre d'exemple préféré que le flux qui quitte le réacteur pénètre dans la partie supérieure du couloir de dégazage 5 tandis que ce flux pénètre ensuite dans la partie basse de la chambre de séparation ; en variante non représentée l'écoulement dans le couloir de dégazage peut se faire de bas en haut, voire horizontalement sur le côté du réacteur 1 et de la chambre 4. Ce couloir 5 peut même être omis dans certains cas.

L'eau à traiter biologiquement, arrivant par la canalisation 2 a en pratique fait l'objet d'un prétraitement physique classique pour en éliminer au moins les particules grossières ($\geqq$ 1 mm) en suspension (en pratique de taille supérieure ou égale à celle du matériau granulaire). Ce prétraitement comporte un dégrillage, ou un tamisage, et un désablage avantageusement complétés par un déshuilage, voire par une décantation primaire. Sauf dans certains cas d'espèces (déphosphatation notamment) ce prétraitement n'inclut pas de traitement chimique complet avant l'entrée de l'eau dans le réacteur ; il peut toutefois y avoir, si besoin est, injection d'additifs juste avant l'entrée de ce réacteur.

De manière préférée le matériau granulaire contenu dans le réacteur de mélange a une granulométrie comprise entre 20 et 500 µm. Il s'agit de préférence de sable fin, matériau qui constitue, pour un coût d'investissement raisonnable, un support approprié pour la fixation et le développement d'une biomasse ; la granulométrie de ce sable est de préférence choisie entre 80 et 200 µm.

La concentration de ce matériau dans le réacteur 1 est maintenue dans une plage prédéterminée, par exemple choisie entre 5 et 100 g/l, de préférence choisie entre 5 et 50 g/l par exemple voisine de 20 g/l, notamment dans le cas du sable.

Le brassage turbulent effectué par l'agitateur mécanique 20 a pour but de maintenir ce matériau granulaire en suspension selon une distribution sensiblement homogène.

Les pales 22 de l'agitateur sont avantageusement réparties en plusieurs niveau et sont de préférence conformées en sorte d'induire le long de l'arbre 21 des écoulements verticaux de sens opposés.

Ce brassage turbulent est en pratique propre à induire au sein du réacteur une recirculation interne d'environ 5 a 100 fois le débit incident d'eau à traiter.

La biomasse qui se développe sur le matériau granulaire est d'une nature qui dépend de la charge organique contenue dans l'eau à traiter et de l'existence ou non dans le réacteur d'une source d'oxygénation. Dans le cas où il y a une oxygénation (voir la figure 1), la présence d'une forte charge organique (DBO) dans l'eau incidente favorise le développement de bactéries consommatrices de particules organiques au détriment de bactéries susceptibles de consommer de l'ammoniaque ; si par contre la charge organique est faible, il se développe surtout des bactéries (lentes à se former mais très adhérentes) adaptées à convertir l'ammoniaque en nitrates. Si enfin il y a une charge organique non nulle, mais sans qu'il y ait une oxygénation, c'est un troisième type de bactéries qui se développe préférentiellement, propre à convertir les nitrates en azote. Compte tenu des inconvénients liés à la formation de nitrates, il peut être avantageux, comme on le verra plus loin, de prévoir deux réacteurs de mélange successifs pour dégrader l'ammoniaque en azote. En fait on peut agir sur le type prépondérant de bactéries, par un ensemencement approprié préalable (on peut également, si l'on veut, favoriser la nitrification, doper l'eau avec de l'ammoniaque). Il est à noter à ce propos que les bactéries nitrifiantes restent fixées sur le matériau granulaire même lors de la récupération.

Compte tenu de ce que, après un temps de séjour approximativement constant en moyenne de l'eau à traiter dans le réacteur 1, cette eau passe en totalité dans la chambre de séparation, il n'y a pas d'accumulation notable de matériau granulaire dans le réacteur ; pour que la concentration de ce matériau granulaire puisse rester sensiblement constante dans le réacteur, avec une concentration approximativement constante de biomasse, il faut que la quasi-totalité du matériau granulaire quittant la chambre de séparation par la canalisation 9 soit réinjectée dans le réacteur 1 par la canalisation de recyclage 3, la canalisation 14 n'effectuant qu'une injection d'appoint. En pratique, au moins les trois-quarts, si ce n'est 90 % (voire plus), du matériau granulaire chargé sortant de la chambre 4 par la canalisation 9, sont réinjectés ; compte tenu de l'aptitude de "ces boues" à être pompées (fluidité), il apparaît qu'il faut réinjecter ce matériau chargé avec un débit valant entre 10 et 500% du débit incident d'eau à traiter, ce taux de recyclage étant d'autant plus faible que ce matériau est en une suspension (boue) concentrée. En pratique ce taux est défini en fonction du maximum de concentration que l'on peut prévoir.

Au lieu d'aboutir dans le réacteur, la canalisation de recyclage peut, en variante non représentée, rejoindre la canalisation 2 juste en amont du réacteur 1.

L'intérêt du couloir de dégazage 5 est de débarrasser le mélange en suspension des bulles d'air qui auraient pu être emprisonnées lors du brassage turbulent et qui seraient susceptibles de fausser la séparation par gravité qui se produit dans la chambre 8 avec du matériau granulaire chargé plus lourd que l'eau.

Le tableau 1 recense les données numériques correspondant à deux régimes de nitrification de l'ammoniaque (ici après élimination de la DBO) obtenus successivement dans une même installation pilote conforme à celle de la figure 1 et telle que :

- le réacteur de mélange est de forme cyclindrique avec une capacité de 30 litres pour une hauteur de 1 m;
- l'alimentation en eau brute de ce réacteur est contrôlée par une pompe à débit variable entre 10 et 30 l/h, dont le débit varie au cours du temps en fonction du volume d'eau à traiter ;
- on a un débit d'environ 20 à 150 l/h pour la pompe de recyclage 11, c'est-à-dire 100 à 500 % du débit de la pompe d'alimentation ;
- le décanteur 25 est incliné à 60° (simulant une décantation lamellaire), et alimenté par le bas, l'eau traitée étant évacuée par surverse.

L'eau incidente est au niveau "E" selon les normes françaises, c'est-à-dire qu'elles ont une teneur maximale en Matières En Suspension (MES) de 30 mg/l pour une Demande Chimique en Oxygene (DCO) de 90 mg/l. Pour les essais, la teneur en ammoniaque de cette eau a été augmentée par dopage de 30 à 90 mg/l de $N-NH_4$.

Les chiffres du tableau 1 correspondent au régime établi obtenu avec une charge incidente de 0,8 kg de $N-NH_4$ par mètre cube de réacteur et par jour. Pour chaque régime d'utilisation sont données deux séries de chiffres, chaque série comportant, le cas échéant, des valeurs d'entrée et de sortie respectivement.

Les deux régimes successifs d'utilisation ont en commun de faire intervenir dans le réacteur une teneur de matériau granulaire en suspension de 40 g/l, une teneur en biomasse de 0,7 g/l - notée MVS (matières volatiles en suspension) -, pour un débit d'air total de 0,5 m3/h qui pourrait être réduit, dans une installation en vraie grandeur, jusqu'à environ 0,1.

Dans le premier régime d'utilisation le débit d'eau à traiter est de 11 l/h ; cette eau est très chargée en ammoniaque (entre 83 et 89 mg/l d'azote) pour une DCO de 42 à 50 mg/l, moins de 10 mg/l de MES et une teneur de $NO_3$ de 24 à 26 mg/l exprimé en $N-NO_3$. Le régime d'utilisation est défini par un taux de recyclage de 400 ou 500 %, un temps de séjour de 3 h dans le réacteur, une vitesse de 20 m/h dans le décanteur et une vitesse de HAZEN (caractéristique du processus de décantation) de 0,26 m/h. On observe un taux d'abattement en ammoniaque de 66 à 72 %.

Dans le second régime d'utilisation, le débit d'eau à traiter est plus élevé (28 l/h) ; la teneur en ammoniaque est moitié moindre (40 ou 56 mg/l d'azote) que dans le premier cas (pas de dopage), pour des teneurs DCO et MES comparables. Le taux de recyclage est plus faible (200 %) ainsi que le temps de séjour (1h). Le taux d'abattement en ammoniaque est encore meilleur (75 et 85 %) que dans le premier cas.

Il ressort des résultats de ces deux régimes que l'invention permet des niveaux très élevés de charge de pollution azotée éliminée par unité de volume du réacteur (0,7 à 1 kg $(N-NH_4)$/m3). A titre de comparaison, une installation fondée sur le principe des boues activées aboutit à des valeurs au plus égales à environ 0,2 kg $(N-NH_4)$/m3 ; (nous rappelons que le principe du lit fluidisé est très peu mis en oeuvre compte tenu des sévères contraintes de fonctionnement qui lui sont liées).

Il est important de noter que l'invention parvient à ces résultats en s'écartant du préjugé de l'homme de métier qui, pour augmenter les performances cherchait à atteindre des teneurs en biomasse (y) de plus en plus élevées : selon l'invention, cette teneur est ici inférieure à 1 g/l, c'est-à-dire plus faible que dans les processus connus.

Par ailleurs, l'indice de MOHLMANN est ici inférieur à 50 ce qui correspond à des valeurs excellentes.

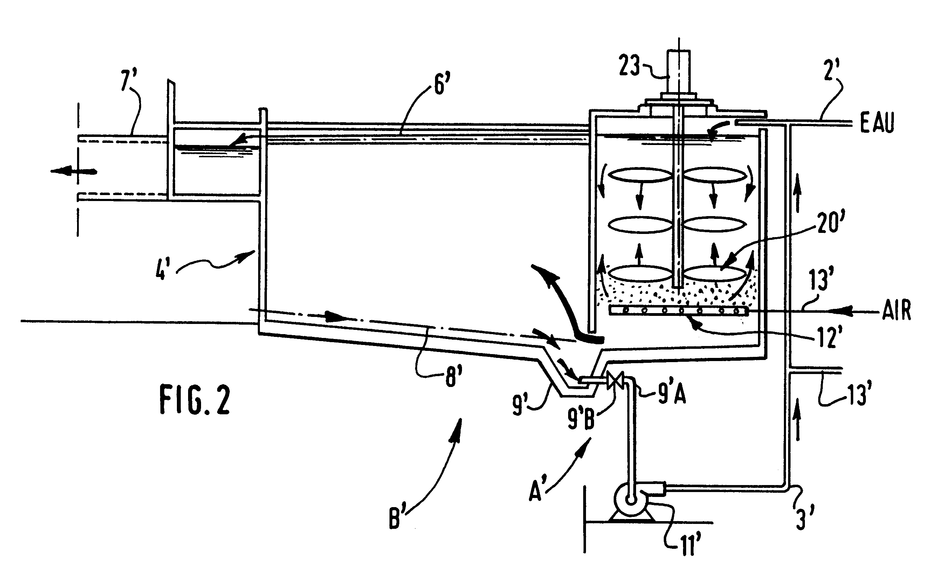

La figure 2 présente une installation de traitement biologique constituant une variante de réalisation de celle de la figure 1 (la chaîne de récupération n'est ici pas représentée puisqu'elle n'est pas nécessaire en cas de pollution uniquement azotée (N-NH$_4$ en particulier) ). Cette installation se distingue de celle de la figure 1 par le fait que la zone de mélange A' communique directement avec la zone de séparation B', sans couloir de dégazage ; en outre, le recyclage s'y fait de façon interne.

La zone de mélange A' est tout à fait similaire à celle de la figure 1 (avec addition de l'indice "prime" aux chiffres de référence désignant les éléments analogues de ceux de la figure 1). L'injection d'eau à traiter se fait en partie haute du réacteur 1' tandis que la communication avec la zone de séparation se fait en partie basse, par sous-verse. La séparation eau-matériau granulaire se fait ici par simple gravité. Le fond de la chambre de séparation 4' est incliné verse le réacteur et est muni de moyens de raclage 8' qui amènent à force le matériau granulaire charge dans une goulotte de récupération 9' située sous la zone de communication par sous-verse entre les zones A' et B'. Cette goulotte 9' est munie d'une tubulure d'extraction 9'A communiquant au travers d'une vanne 9'B avec une tubulure 3' de recyclage de matériau granulaire chargé munie comme précédemment de moyens de pompage 11'. Une éventuelle injection 13' de matériau granulaire d'appoint, se fait avantageusement dans cette tubulure de recyclage en aval (voire en amont) de la pompe précitée non représentée.

Cette installation peut aussi être utilisée pour dégrader en même temps la charge organique de l'eau à traiter : il se forme alors des boues abondantes qui rendent en pratique très utile de procéder à une récupération par séparation du matériau granulaire et à une évacuation de la biomasse en excès.

L'installation de la figure 2 a l'avantage d'être très compacte.

On peut remarquer que, dans cet exemple de la figure 2, la tubulure de recyclage se raccorde, non pas au réacteur 1', mais à la canalisation 2' d'admission d'eau à traiter.

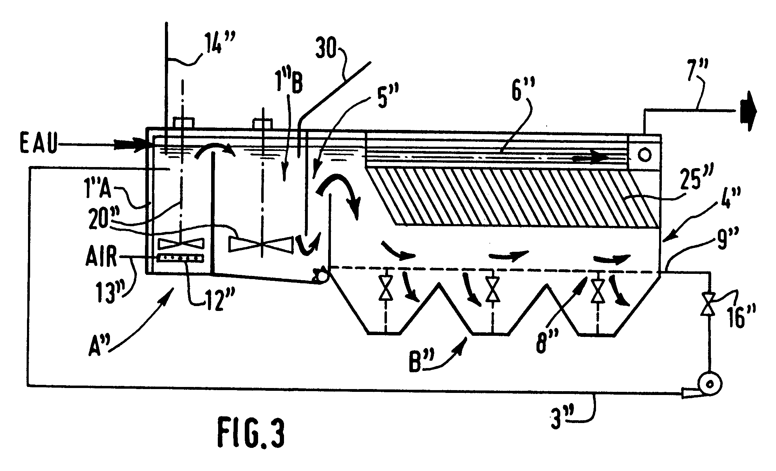

La figure 3 est une variante (schématique) à plusieurs réacteurs en série de l'installation des figures 1 ou 2, adaptée à un traitement de nitrification-dénitrification de l'eau à traiter, associé à un traitement de la DBO.

Cette installation comporte un premier réacteur 1''A similaire à celui des figures 1 et 2 et comportant une rampe d'oxygénation 12'' : il s'établit un régime aérobie propre à favoriser des bactéries qui convertissent l'ammoniaque en nitrates (on peut les favoriser à l'origine par ensemencement). Ce réacteur 1''A communique, ici par surverse, avec un second réacteur de mélange 1''B qui se distingue de celui des figures 1 et 2 par l'absence de toute source d'oxygénation (milieu anoxique). On y injecte en 30 une source de carbone organique (par exemple sous forme de méthanol, de mélasse, d'acide acétique...) ; par cette injection de substrat on favorise le développement de bactéries convertissant en azote gazeux les nitrates formés dans le réacteur de mélange 1''A. Ce second réacteur communique par sous-verse avec une cheminée 5'' de dégazage puis pénètre dans la zone de séparation 4''. On recycle, comme précédemment, la majeure partie du matériau granulaire chargé recueilli dans la zone de décantation B''.

Selon une variante de réalisation (non représentée) uniquement consacrée à la dénitrification, on supprime le premier réacteur 1''A.

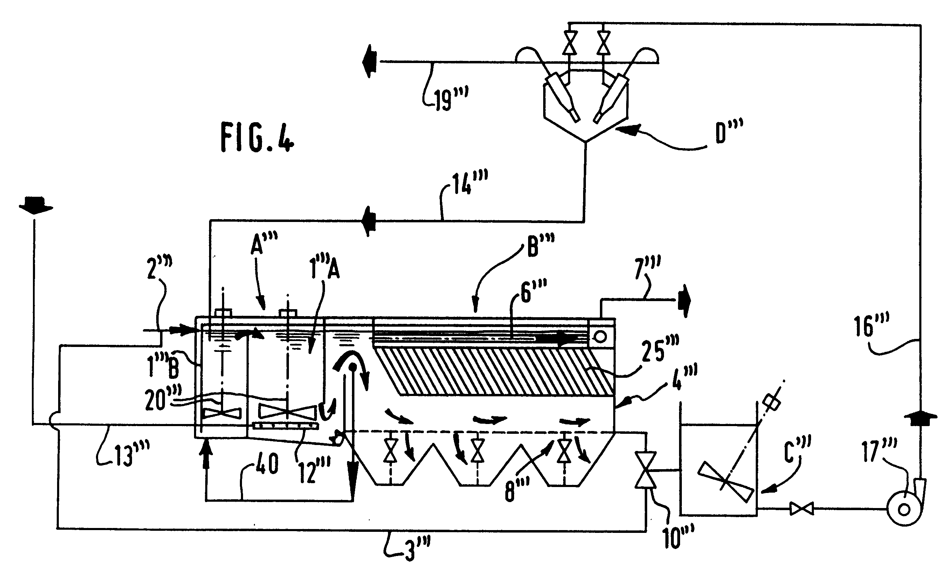

La figure 4 est une variante de la figure 1 qui comporte deux réacteurs de mélange 1'''A et 1'''B qui correspondent aux réacteur 1''A et 1''B de la figure 3, mais sont traversés par le liquide à traiter dans un ordre inverse de celui de la figure 3 : en effet, le liquide à traiter traverse d'abord le réacteur 1'''B maintenu en condition anoxique puis le réacteur 1'''A maintenu en condition aérobie. Une canalisation 40 munie de moyens de pompage non représentés permet un recyclage du liquide, chargé en matériau granulaire, depuis la sortie du réacteur 1'''A vers le réacteur 1'''B. De la sorte, les nitrates formés dans le réacteur 1'''A sont réinjectés dans le réacteur 1'''B pour y être convertis en azote gazeux par des bactéries se nourrissant du carbone organique contenu dans le liquide à traiter. En pratique, le débit de recyclage entre la sortie du réacteur 1'''A et l'entrée du réacteur 1'''B est de préférence choisi entre 1 et 6 fois (de préférence entre 2 et 4 fois) le débit incident d'eau à traiter.

Comme précédemment, il y a recyclage du matériau granulaire sortant de la zone de séparation 4''' vers la zone de mélange (de préférence vers le réacteur 1'''B, ou sinon vers le réacteur 1'''A) par une ligne 3'''.

Cette installation de la figure 4 peut être parfois préférée pour le traitement des eaux usées tandis que l'installation de la figure 3 peut être parfois préférée pour la préparation d'eaux potables.

Il va de soi que la description qui précède n'a été proposée qu'à titre d'exemple non limitatif et que de nombreuses variantes peuvent être proposées par l'homme de l'art sans sortir du cadre de l'invention.

Ainsi, par exemple, le matériau granulaire de préférence naturel (minéral), au lieu de sable fin, peut être choisi parmi les matériaux suivants : argile ou clinoptilolite, ponce, kaolinite.

## TABLEAU 1

| | Débit d'eau Incident l/h | NH4+ en mg/l de N | Abattement NH4 % | DCO en mg/l | MES en mg/l | NO3 en mg/l de N | Recyclage Boues % | Temps de séjour dans réacteur | Vitesse dans décanteur en m/h | Vitesse Hazen m/h | Sable dans réacteur g/l | MVS dans réacteur g/l | Charge éliminée Kg (N-NH4)/m³ | Air Total m3/h |
|---|---|---|---|---|---|---|---|---|---|---|---|---|---|---|
| Eau à traiter | 11 | 89 | 72 | 42 | 7 | 24,2 | 500 | 3 h 00 | 20 | 0,26 | 40 | 0,7 | 0,75 | 0,5 |
| Eau traitée | | 24,5 | | 40 | 2 | 83,5 | | | | | | | | |
| Eau à traiter | 11 | 82,5 | 66 | 50 | 9 | 26 | 400 | 3 h 00 | 20 | 0,26 | 40 | 0,7 | 0,7 | 0,5 |
| Eau traitée | | 28 | | 38 | 2 | 85,6 | | | | | | | | |
| Eau à traiter | 28 | 40 | 85 | 40 à 50 | < 10 | 8 | 200 | 1 h 00 | 40 | 1 | 40 | 0,7 | 1,02 | 0,5 |
| Eau traitée | | 6 | | 40 | < 10 | 39 | | | | | | | | |
| Eau à traiter | 28 | 56 | 75 | 50 | < 10 | 13 | 200 | 1 h 00 | 40 | 1 | 40 | 0,7 | 0,9 | 0,5 |
| Eau traitée | | 14 | | 45 | | 59 | | | | | | | | |

**Revendications**

1. Procédé de traitement biologique d'une eau résiduaire à traiter contenant une pollution azotée, selon lequel :
   - on amène un débit incident de cette eau dans une zone de mélange à au moins un compartiment (A, A', A") dans laquelle, par brassage mécanique turbulent, on met en suspension homogène dans cette eau un matériau granulaire peu consommable et peu soluble, chargé en biomasse, que l'on maintient à une concentration massique sensiblement constante ;
   - on fait circuler cette suspension homogène d'eau et de matériau granulaire dans une zone de séparation (B, B', B") dont on extrait, d'une part de l'eau clarifiée, d'autre part du matériau granulaire chargé en biomasse ; et
   - on ramène par recyclage forcé la quasi-totalité de la biomasse active fixée sur ledit matériau granulaire vers la zone de mélange (A, A', A").

2. Procédé selon la revendication 1, caractérisé en ce que, la pollution azotée étant sous forme d'ammoniaque, on injecte en outre dans la zone de mélange (A, A', A") de l'oxygène dans un débit propre à favoriser le développement d'une biomasse consommatrice de la pollution contenue dans l'eau à traiter.

3. Procédé selon la revendication 2, caractérisé en ce qu'on injecte cet oxygène sous forme d'air.

4. Procédé selon la revendication 1, caractérisé en ce que, la pollution azotée étant sous forme de nitrate, on injecte en outre dans cette zone de mélange en milieu anoxique une source de carbone organique.

5. Procédé selon la revendication 1, caractérisé en ce que, l'eau à traiter contenant une pollution azotée sous forme organique ou sous forme d'ammoniaque, la zone de mélange comporte en série une zone aérobie de nitrification (1"A) dans laquelle on injecte de l'oxygène, puis une zone anoxique de dénitrification (1"B) dans laquelle on injecte une source de carbone organique.

6. Procédé selon la revendication 1, caractérisé en ce que, l'eau à traiter contenant une pollution azotée sous forme organique ou sous forme d'ammoniaque, la zone de mélange comporte en série une zone anoxique de dénitrification (1‴B) puis une zone aérobie de nitrification (1‴A) dans laquelle on injecte de l'oxygène, du liquide chargé en matériau granulaire sortant de la zone aérobie de nitrification étant recyclé vers la zone anoxique de dénitrification avec un débit au moins égal au débit incident d'eau à traiter.

7. Procédé selon l'une quelconque des revendications 1 à 6, caractérisé en ce que le matériau granulaire que l'on met en suspension homogène est du sable fin.

8. Procédé selon l'une quelconque des revendications 1 à 7, caractérisé en ce qu'on récupère par séparation le matériau granulaire contenu dans une partie résiduelle non recyclée des boues et on le réinjecte avec de la biomasse fixée dans la zone de mélange, tandis qu'on évacue des boues séparées de ce matériau granulaire.

9. Procédé selon l'une quelconque des revendications 1 à 8, caractérisé en ce que la concentration du matériau granulaire dans la zone de mélange est maintenue approximativement a une valeur comprise entre 5 et 100 g/l.

10. Procédé selon la revendication 9, caractérisé en ce que la concentration du matériau granulaire étant du sable fin, sa concentration est maintenue à une valeur comprise entre 5 et 50 g/l.

11. Procédé selon l'une quelconque des revendications 1 à 10, caractérisé en ce que le brassage turbulent induit un recyclage interne entre 5 et 100 fois le débit incident.

12. Procédé selon l'une quelconque des revendications 1 à 11, caractérisé en ce qu'on ramène dans la zone de mélange par recyclage forcé la suspensions dans un débit valant entre 10 et 500 % du débit incident de l'eau.

13. Procédé selon l'une quelconque des revendications 1 à 12, caractérisé en ce qu'on ramène cette quasi-totalité du matériau granulaire chargé dans le débit incident d'eau en amont de la zone de mélange.

**14.** Procédé selon l'une quelconque des revendications 1 à 13, caractérisé en ce qu'on laisse dégazer (5, 5″) la suspension homogène avant de la faire pénétrer dans la zone de séparation.

**15.** Installation de traitement biologique d'une eau résiduaire prétraitée contenant une pollution azotée comportant :
- une zone de mélange (A, A′, A″, A‴) à au moins un compartiment dans laquelle débouche une canalisation (2, 2′, 2″) d'admission d'eau à traiter, qui contient un matériau granulaire peu consommable et peu soluble chargé en biomasse fixée, et qui est munie de moyens mécaniques (20) de brassage turbulent, capables de maintenir l'eau et le matériau granulaire en suspension homogène jusque dans une zone de séparation située en aval ;
- cette zone de séparation (B, B′, B″) en aval de la zone de mélange munie d'une voie (7, 7′, 7″) d'évacuation d'eau clarifiée et une voie (9 ; 9′A, 9′B ; 9″) d'évacuation de matériau granulaire chargé ; et
- une canalisation (3, 3′, 3″A) de recyclage munie de moyens de pompage (11), partant de la voie d'évacuation de boues et du matériau granulaire chargé en biomasse et aboutissant à la zone de mélange ou en amont de celle-ci.

**16.** Installation selon la revendication 15, caractérisée en ce que la zone de mélange (A, A′, A″) comporte un réacteur de mélange (1, 1′, 1″) comportant des moyens d'oxygénation (12).

**17.** Installation selon la revendication 16, caractérisée en ce que les moyens d'oxygénation sont formés par une rampe d'oxygénation.

**18.** Installation selon la revendication 15, caractérisée en ce que la zone de mélange comporte en série un réacteur aérobie de nitrification (1″A) contenant une arrivée d'oxygène (12″) et un réacteur anoxique de dénitrification (1″B) contenant une arrivée (30) de carbone organique.

**19.** Installation selon la revendication 15, caractérisée en ce que la zone de mélange comporte en série un réacteur anoxique de dénitrification (1‴B), puis un réacteur aérobie de nitrification (1‴A) muni d'une arrivée d'oxygène, une canalisation de recyclage (40) étant connectée entre la sortie du réacteur aérobie de nitrification (1‴A) et le réacteur anoxique de dénitrification (1‴B).

**20.** Installation selon l'une quelconque des revendications 15 à 19, caractérisée en ce que les moyens mécaniques de brassage turbulent (20) comportent un agitateur.

**21.** Installation selon la revendication 20, caractérisée en ce que cet agitateur comporte des pales (22) décalées le long d'un arbre d'entraînement (21) et conformés en sorte de provoquer le long de cet arbre des écoulements de sens contrariés.

**22.** Installation selon la revendication 20 ou la revendication 21, caractérisée en ce que cet agitateur est disposé verticalement.

**23.** Installation selon l'une quelconque des revendications 15 à 22, caractérisé en ce que le matériau granulaire est du sable fin.

**24.** Installation selon l'une quelconque des revendications 15 à 23, caractérisé en ce que le matériau granulaire a dans la zone de mélange une concentration comprise entre 5 et 100 g/l.

**25.** Installation selon la revendication 24, caractérisé en ce que cette concentration est comprise entre 5 et 50 g/l.

**26.** Installation selon l'une quelconque des revendications 15 à 25, caractérisée en ce que le matériau granulaire a une granulométrie comprise entre 20 et 500 μm.

**27.** Installation selon la revendication 26, caractérisée en ce que le matériau granulaire est du sable de granulométrie comprise entre 80 et 200 μm.

**28.** Installation selon l'une quelconque des revendications 15 à 27, caractérisée en ce qu'elle comporte une chaîne de récupération/séparation (C, D) partant de la voie d'évacuation de matériau granulaire chargé en aval de la canalisation de recyclage et aboutissant à une canalisation de réinjection de matériau granulaire chargé en biomasse aboutissant à la zone de mélange ou en amont de celle-ci.

29. Installation selon la revendication 28, caractérisée en ce que la chaîne de récupération comporte au moins un hydrocyclone (D).

30. Installation selon la revendication 28, caractérisée en ce que la chaîne de récupération comporte un moyen de séparation par ultrasons à puissance modérée.

31. Installation selon la revendication 28, caractérisée en ce que la chaîne de récupération comporte un moyen de séparation par tamisage.

32. Installation selon la revendication 28, caractérisée en ce que la chaîne de récupération comporte un moyen de séparation par centrifugation.

33. Installation selon la revendication 28, caractérisée en ce que la chaîne de récupération comporte un moyen de séparation par voie chimique ou biologique.

34. Installation selon l'une quelconque des revendications 15 à 33, caractérisée en ce qu'elle comporte une zone de dégazage entre la zone de mélange et la zone de séparation.

35. Installation selon l'une quelconque des revendications 15 à 34, caractérisée en ce que la zone de séparation comporte des moyens de décantation.

36. Installation selon la revendication 35, caractérisée en ce que la zone de séparation comporte des éléments (26) de décantation lamellaire.

37. Installation selon l'une quelconque des revendications 15 à 34, caractérisée en ce que la zone de séparation comporte des moyens de centrifugation.

38. Installation selon l'une quelconque des revendications 15 à 34, caractérisée en ce que la zone de séparation comporte des moyens de tamisage.

39. Installation selon l'une quelconque des revendications 15 à 34, caractérisée en ce que la zone de séparation comporte des moyens de filtration sur membrane.

**Patentansprüche**

1. Verfahren zur biologischen Behandlung eines zu behandelnden Abwassers, das mit Stickstoff verschmutzt ist, gemäß welchem
   - man eine zuströmende Menge dieses Wassers in eine Mischzone mit mindestens einer Abteilung (A, A', A'') leitet, in welcher man in diesem Wasser durch turbulentes mechanisches Rühren ein wenig verbrauchbares und wenig lösliches, mit Biomasse beladenes Granulat in homogene Suspension bringt, das man auf einer im wesentlichen konstanten Massenkonzentration hält,
   - man diese homogene Suspension aus Wasser und Granulat in einer Abtrennzone (B, B', B'') zirkulieren läßt, aus der man einesteils geklärtes Wasser, anderenteils mit Biomasse beladenes Granulat entnimmt, und
   - man die aktive Biomasse, die auf dem genannten Granulat fixiert ist, über eine Zwangsrückführung fast vollständig zur Mischzone (A, A', A'') zurückleitet.

2. Verfahren nach Anspruch 1, dadurch gekennzeichnet, daß die Stickstoffverschmutzung in Form einer ammoniakalische Lösung vorliegt und daß man ferner in die Mischzone (A, A', A'') Sauerstoff in einer geeigneten Menge einführt, um die Entwicklung einer Biomasse zu begünstigen, welche die im zu behandelnden Wasser enthaltene Verschmutzung verwertet.

3. Verfahren nach Anspruch 2, dadurch gekennzeichnet, daß man diesen Sauerstoff in Form von Luft einführt.

4. Verfahren nach Anspruch 1, dadurch gekennzeichnet, daß die Stickstoffverschmutzung in Form von Nitrat vorliegt und daß man ferner in diese Mischzone unter anoxischen Bedingungen eine organische Kohlenstoffquelle einbringt.

5. Verfahren nach Anspruch 1, dadurch gekennzeichnet, daß das zu behandelnde Wasser eine Stickstoffverschmutzung in organischer Form oder in Form einer ammoniakalischen Lösung enthält und die Mischzone hintereinander eine aerobe Nitrifikationszone (1″A), in welche man den Sauerstoff einführt, und dahinter eine anoxische Denitrifikationszone (1″B) umfaßt, in welche man eine organische Kohlenstoffquelle einbringt.

6. Verfahren nach Anspruch 1, dadurch gekennzeichnet, daß das zu behandelnde Wasser eine Stickstoffverschmutzung in organischer Form oder in Form einer ammoniakalischen Lösung enthält und die Mischzone hintereinander eine anoxische Denitrifikationszone (1‴B) und dahinter eine aerobe Nitrifikationszone (1‴A) enthält, in welche man Sauerstoff einbringt, wobei mit Granulat beladene Flüssigkeit die aerobe Nitrifikationszone verläßt und durch die anoxische Denitrifikationszone in einer Menge zurückgeführt wird, die mindestens genauso groß ist wie die zuströmende Menge des zu behandelnden Wassers.

7. Verfahren nach einem der Ansprüche 1 bis 6, dadurch gekennzeichnet, daß das Granulat, das man in homogene Suspension bringt, Feinsand ist.

8. Verfahren nach einem der Ansprüche 1 bis 7, dadurch gekennzeichnet, daß man durch Abtrennung dasjenige Granulat zurückgewinnt, das in einem nicht zurückgeführten Restteil von Schlamm enthalten ist, und daß man es mit der darauf fixierten Biomasse wieder in die Mischzone zurückleitet, während man Schlamm, der von diesem Granulat befreit worden ist, austrägt.

9. Verfahren nach einem der Ansprüche 1 bis 8, dadurch gekennzeichnet, daß die Konzentration des Granulates in der Mischzone ungefähr auf einem Wert zwischen 5 und 100 g/l gehalten wird.

10. Verfahren nach Anspruch 9, dadurch gekennzeichnet, daß die Konzentration des aus Feinsand bestehenden Granulates auf einem Wert zwischen 5 und 50 g/l gehalten wird.

11. Verfahren nach einem der Ansprüche 1 bis 10, dadurch gekennzeichnet, daß das turbulente Rühren eine interne Rückführung zwischen dem 5- und 100-Fachen der zuströmenden Menge induziert.

12. Verfahren nach einem der Ansprüche 1 bis 11, dadurch gekennzeichnet, daß man die Suspension durch Zwangsrückführung in einer Menge in die Mischzone zurückleitet, die 10 bis 500% der Menge des eingeleiteten Wassers entspricht.

13. Verfahren nach einem der Ansprüche 1 bis 12, dadurch gekennzeichnet, daß man das beladene Granulat in Strömungsrichtung gesehen vor der Mischzone fast vollständig in die zuströmende Menge des Wassers einleitet.

14. Verfahren nach einem beliebigen der Ansprüche 1 bis 13, dadurch gekennzeichnet, daß man die homogene Suspension entgasen läßt (5, 5″), bevor man sie in die Abtrennzone einleitet.

15. Anlage zur biologischen Behandlung eines vorbehandelten Abwassers, welches mit Stickstoff verunreinigt ist,
   - mit einer Mischzone (A, A′, A″, A‴) mit mindestens einer Abteilung, in welche eine Zuleitung (2, 2′, 2″) für das zu behandelnde Wasser einmündet, wobei die Mischzone ein wenig verbrauchbares und wenig lösliches Granulat enthält, das mit fixierter Biomasse beladen ist, und mit mechanischen Mitteln (20) zum turbulenten Rühren versehen ist, welche das Wasser und das Granulat bis zu einer stromabwärts angeordneten Abtrennzone in homogener Suspension halten können,
   - wobei diese stromabwärts zur Mischzone gelegene Abtrennzone (B, B′, B″) eine Leitung (7, 7′. 7″) zum Abziehen von geklärtem Wasser und eine Leitung (9; 9′A, 9′B; 9″) zum Austragen von beladenem Granulat aufweist, und
   - wobei eine mit einer Pumpeinrichtung (11) versehene Rückleitung (3, 3′, 3″A) vorgesehen ist, die bei der Leitung zum Austragen von Schlamm und von mit Biomasse beladenem Granulat beginnt und zur Mischzone oder einer stromaufwärts dazu gelegenen Stelle führt.

16. Anlage nach Anspruch 15, dadurch gekennzeichnet, daß die Mischzone (A, A′, A‴) einen Mischreaktor (1, 1′, 1″) aufweist, der mit einer Oxygeniereinrichtung (12) versehen ist.

17. Anlage nach Anspruch 16, dadurch gekennzeichnet, daß die Oxygeniereinrichtung durch ein Oxygenierrohr gebildet wird.

18. Anlage nach Anspruch 15, dadurch gekennzeichnet, daß die Mischzone in Reihe einen Reaktor zur aeroben Nitrifikation (1″A), der eine Sauerstoffzuleitung (12″) aufweist, und einen Reaktor zur anoxischen Denitrifikation (1″B) umfaßt, der mit einer Zuführungsleitung (30) für organischen Kohlenstoff versehen ist.

19. Anlage nach Anspruch 15, dadurch gekennzeichnet, daß die Mischzone in Reihe einen Reaktor zur anoxischen Denitrifikation (1‴B) und dahinter einen Reaktor zur aeroben Nitrifikation (1‴A) aufweist, welcher mit einer Sauerstoffzuleitung versehen ist, wobei eine Rückführungsleitung (40) den Auslaß des Reaktors zur aeroben Nitrifikation mit dem Reaktor zur anoxischen Denitrifikation verbindet.

20. Anlage nach einem der Ansprüche 15 bis 19, dadurch gekennzeichnet, daß die mechanischen Mittel zum turbulenten Rühren (20) ein Rührwerk umfassen.

21. Anlage nach Anspruch 20, dadurch gekennzeichnet, daß das Rührwerk Flügel (22) aufweist, die längs einer Antriebswelle (21) versetzt angeordnet und derart ausgebildet sind, daß sie entlang dieser Antriebswelle Strömungen in entgegengesetzten Richtungen auslösen.

22. Anlage nach Anspruch 20 oder 21, dadurch gekennzeichnet, daß das Rührwerk vertikal angeordnet ist.

23. Anlage nach einem der Ansprüche 15 bis 22, dadurch gekennzeichnet, daß das Granulat Feinsand ist.

24. Anlage nach einem der Ansprüche 15 bis 23, dadurch gekennzeichnet, daß das Granulat in der Mischzone eine Konzentration von 5 bis 100 g/l aufweist.

25. Anlage nach Anspruch 24, dadurch gekennzeichnet, daß diese Konzentration 5 bis 50 g/l beträgt.

26. Anlage nach einem der Ansprüche 15 bis 25, dadurch gekennzeichnet, daß das Granulat eine Korngröße von 20 bis 500 μm aufweist.

27. Anlage nach Anspruch 26, dadurch gekennzeichnet, daß das Granulat Sand mit einer Korngröße von 80 bis 200 μm ist.

28. Anlage nach einem der Ansprüche 15 bis 27, dadurch gekennzeichnet, daß sie eine Rückgewinnungs-/Abtrennungskette (C, D) aufweist, die von der Leitung zum Austragen des beladenen Granulates stromabwärts hinter der Rückleitung läuft und zu einer Leitung zum Wiedereinspeisen des mit Biomasse beladenen Granulates in die Mischzone oder oberhalb derselben geführt wird.

29. Anlage nach Anspruch 28, dadurch gekennzeichnet, daß die Rückgewinnungskette mindestens einen Hydrozyklon (D) aufweist.

30. Anlage nach Anspruch 28, dadurch gekennzeichnet, daß die Rückgewinnungskette eine Ultraschall-Abtrenneinrichtung mit geringer Leistung aufweist.

31. Anlage nach Anspruch 28, dadurch gekennzeichnet, daß die Rückgewinnungskette eine Sieb-Abtrenneinrichtung aufweist.

32. Anlage nach Anspruch 28, dadurch gekennzeichnet, daß die Rückgewinnungskette eine Zentrifugier-Abtrenneinrichtung aufweist.

33. Anlage nach Anspruch 28, dadurch gekennzeichnet, daß die Rückgewinnungskette eine Einrichtung zum Abtrennen auf chemischem oder biologischem Wege aufweist.

34. Anlage nach einem der Ansprüche 15 bis 33, dadurch gekennzeichnet, daß sie eine Entgasungzone zwischen der Mischzone und der Abtrennzone aufweist.

35. Anlage nach einem der Ansprüche 15 bis 34, dadurch gekennzeichnet, daß die Abtrennzone Mittel zum Dekantieren aufweist.

36. Anlage nach Anspruch 35, dadurch gekennzeichnet, daß die Abtrennzone Lamellendekantierungs-Elemente (26) aufweist.

**37.** Anlage nach einem der Ansprüche 15 bis 34, dadurch gekennzeichnet, daß die Abtrennzone Mittel zum Zentrifugieren aufweist.

**38.** Anlage nach einem der Ansprüche 15 bis 34, dadurch gekennzeichnet, daß die Abtrennzone Mittel zum Sieben aufweist.

**39.** Anlage nach einem der Ansprüche 15 bis 34, dadurch gekennzeichnet, daß die Abtrennzone Mittel für eine Membranfiltration aufweist.

**Claims**

**1.** A process for the biological treatment of an effluent to be treated which contains nitrogen pollution, according to which:
   - an incident flow of said effluent is introduced into a mixing zone having at least one compartment (A, A′, A″) in which by turbulent mechanical agitation a granular material of low consumability and low solubility charged with biomass is put into suspension in said effluent and is maintained at a substantially constant mass concentration;
   - said homogeneous suspension of water and granular material is circulated in a separation zone (B, B′, B″) from which on the one hand clarified water and on the other hand granular material charged with biomass are extracted; and
   - substantially the whole of the active biomass fixed to said granular material is returned by forced recycling to the mixing zone (A, A′, A″).

**2.** A process according to claim 1, characterized in that if the nitrogen pollution takes the form of ammonia, oxygen is also injected into the mixing zone (A, A′, A″) at a supply rate adapted to encourage the development of a biomass which consumes the pollution contained in the effluent to be treated.

**3.** A process according to claim 2, characterized in that said oxygen is ejected in the form of air.

**4.** A process according to claim 1, characterized in that if the nitrogen pollution takes the form of nitrate, a source of organic carbon is also injected into said mixing zone in an anaerobic environment.

**5.** A process according to claim 1, characterized in that if the effluent to be treated contains nitrogen in organic form or in the form of ammonium hydroxide, the mixing zone comprises in series an anaerobic nitrification zone (1″A) into which oxygen is injected, and then an anaerobic denitrification zone (1″B) into which a source of organic carbon is injected.

**6.** A process according to claim 1, characterized in that if the effluent to be treated contains nitrogen pollution in organic form or in the form of ammonia, the mixing zone comprises in series an anaerobic denitrification zone (1‴B), then an aerobic nitrification zone (1‴A) into which oxygen is injected, liquid charged with granular material leaving the aerobic nitrification zone being recycled to the anaerobic denitrification zone at a supply rate at least equal to the incident supply rate of effluent to be treated.

**7.** A process according to any of claims 1 to 6, characterized in that the granular material put into homogeneous suspension is fine sand.

**8.** A process according to any of claims 1 to 7, characterized in that the granular material contained in a non-recycled residual portion of the sludges is recovered by separation and reinjected together with fixed biomass into the mixing zone, while sludges separated from said granular material are evacuated.

**9.** A process according to any of claims 1 to 8, characterized in that the concentration of granular material in the mixing zone is maintained substantially at a value between 5 and 100 g/l.

**10.** A process according to claim 9, characterized in that if the concentration of granular material is a fine sand, its concentration is maintained at a value between 5 and 50 g/l.

**11.** A process according to any of claims 1 to 10, characterized in that the turbulent agitation induces an internal recycling of between 5 and 100 times the incident supply rate.

**12.** A process according to any of claims 1 to 11, characterized in that the suspension is returned to the mixing zone by forced recycling in an amount of between 10 and 500% of the incident supply rate of effluent.

**13.** A process according to any of claims 1 to 12, characterized in that substantially all the charged granular material in the incident water supply is returned upstream of the mixing zone.

**14.** A process according to any of claims 1 to 13, characterized in that the homogeneous suspension is degassed (5, 5″) before being passed into the separation zone.

**15.** An installation for the biological treatment of a pretreated effluent containing nitrogen pollution, comprising:
- a mixing zone (A, A′, A″, A‴) having at least one compartment into which a pipe (2, 2′, 2″) admitting effluent to be treated discharges and which contains a granular material of low consumability and low solubility charged with fixed biomass and which has mechanical means (20) for turbulent mixing and is able to maintain the effluent and the granular material in homogeneous suspension as far as a downstream separation zone;
- said separation zone (B, B′, B″) downstream of the mixing zone having a channel (7, 7′, 7″) for evacuating clarified water and a channel (9; 9′A, 9′B; 9″) for evacuating charged granular material; and
- a recycling pipe (3, 3′, 3″A) having pumping means (11) which starts from the evacuating channel for the sludges and the granular material charged with biomass and terminates at the mixing zone or upstream thereof.

**16.** An installation according to claim 15, characterized in that the mixing zone (A, A′, A″) comprises a mixing reactor (1, 1′, 1″) comprising oxygenation means (12).

**17.** An installation according to claim 16, characterized in that the oxygenation means are formed by an oxygenation manifold.

**18.** An installation according to claim 15, characterized in that the mixing zone comprises in series an aerobic nitrification reactor (1″A) including an oxygen input (12″) and an anaerobic denitrification reactor (1″B) including an organic carbon input (30).

**19.** An installation according to claim 15, characterized in that the mixing zone comprises in series an anaerobic denitrification reactor (1‴B) and then an aerobic nitrification reactor (1‴A) having an oxygen input, a recycling pipe (40) being connected between the outlet of the aerobic nitrification reactor (1‴A) and the anaerobic denitrification reactor (1‴B).

**20.** An installation according to any of claims 15 to 19, characterized in that the mechanical means (20) for turbulent agitation comprise an agitator.

**21.** An installation according to claim 20, characterized in that said agitator comprises blades (22) offset along a driving shaft (21) and so shaped as to produce flows along said shaft in opposite directions.

**22.** An installation according to claims 20 or 21, characterized in that said agitator is disposed vertically.

**23.** An installation according to any of claims 15 to 22, characterized in that the granular material is fine sand.

**24.** An installation according to any of claims 15 to 23, characterized in that the granular material has a concentration between 5 and 100 g/l in the mixing zone.

**25.** An installation according to claim 24, characterized in that said concentration is between 5 and 50 g/l.

**26.** An installation according to any of claims 15 to 25, characterized in that the granular material has a grain size of between 20 and 500 $\mu$m.

**27.** An installation according to claim 26, characterized in that the granular material is sand having a grain size between 80 and 200 $\mu$m.

**28.** An installation according to any of claims 15 to 27, characterized in that it comprises a recovery/separation line (C, D) starting from the channel for evacuating charged granular material downstream of the recycling pipe and terminating at a channel for reinjecting granular material charged with biomass and terminating at the mixing zone or upstream thereof.

29. An installation according to claim 28, characterized in that the recovery line comprises at least one hydrocyclone (D).

30. An installation according to claim 28, characterized in that the recovery line comprises a means of separation by ultrasonics at a moderate power level.

31. An installation according to claim 28, characterized in that the recovery line comprises a means of separation by sieving.

32. An installation according to claim 28, characterized in that the recovery line comprises a means of separation by centrifugation.

33. An installation according to claim 28, characterized in that the recovery line comprises a chemical or biological means of separation.

34. An installation according to any of claims 15 to 33, characterized in that it comprises a degassing zone between the mixing zone and the separation zone.

35. An installation according to any of claims 15 to 34, characterized in that the separation zone comprises decanting means.

36. An installation according to claim 35, characterized in that the separation zone comprises laminar decanting elements (26).

37. An installation according to any of claims 15 to 34, characterized in that the separation zone comprises centrifugation means.

38. An installation according to any of claims 15 to 34, characterized in that the separation zone comprises sieving means.

39. An installation according to any of claims 15 to 34, characterized in that the separation zone comprises means for filtration over a membrane.

FIG.1

EP 0 383 674 B1

FIG.2

EP 0 383 674 B1

FIG.3

FIG.4

EP 0 383 674 B1